(19) Europäisches Patentamt
European Patent Office
Office européen des brevets

(11) **EP 1 564 543 B1**

(12) **EUROPÄISCHE PATENTSCHRIFT**

(45) Veröffentlichungstag und Bekanntmachung des Hinweises auf die Patenterteilung:
**11.07.2007   Patentblatt 2007/28**

(51) Int Cl.:
*G01N 21/17 (2006.01)*

(21) Anmeldenummer: **04450223.5**

(22) Anmeldetag: **01.12.2004**

(54) **Messkammer für einen photoakustischen Gassensor**

Measuring cell for a photoacoustic gas sensor

Chambre de mesure d'un détecteur de gaz photoacoustique

(84) Benannte Vertragsstaaten:
**DE DK GB**

(30) Priorität: **28.01.2004   AT 522004 U**

(43) Veröffentlichungstag der Anmeldung:
**17.08.2005   Patentblatt 2005/33**

(73) Patentinhaber: **AVL List GmbH**
**8020 Graz (AT)**

(72) Erfinder:
• **Schindler, Wolfgang, Dr.**
**8010 Graz (AT)**
• **Harms, Klaus-Christoph, Dr.**
**8051 Tahl/Graz (AT)**
• **Knopf, Franz**
**8051 Graz (AT)**
• **Grantner, Harald, Dipl.-Ing. (FH)**
**8020 Graz (AT)**

(74) Vertreter: **Laminger, Norbert et al**
**Prinz-Eugen-Strasse 70**
**1040 Wien (AT)**

(56) Entgegenhaltungen:
**WO-A-01/20304**          **US-A1- 2002 017 617**

• **BECK, H: "Development and characterisation of a mobile photoacoustic sensor for on-line soot monitoring in diesel exhaust gas" ANAL. BIOANAL. CHEM., Bd. 375, 2003, Seiten 1136-1143, XP002332964**
• **ROESSLER, D: "Photoacoustic insights on diesel exhaust particles" APPLIED OPTICS, Bd. 23, Nr. 8, 1984, Seiten 1148-1155, XP002332965**

**Beschreibung**

Die Erfindung betrifft eine Messkammer für photoakustische Sensoren zur kontinuierlichen Messung von strahlungsabsorbierenden Substanzen, insbesondere von strahlungsabsorbierenden Partikeln, in gasförmigen Proben, mit zumindest einem Einlaß und zumindest einem Auslaß für die Proben, einem von der Probe in Längsrichtung durchströmbaren Rohrabschnitt mit Mikrophon, sowie mit zumindest einer mit dem Rohrabschnitt fluchtenden Eintritts- und Austrittsstelle für einen Laserstrahl, welche Eintritts- und Austrittsstelle durch zumindest jeweils eine Kammer mit gegenüber dem Rohrabschnitt erweiterten Querschnittsfläche vom Messrohr beabstandet sind

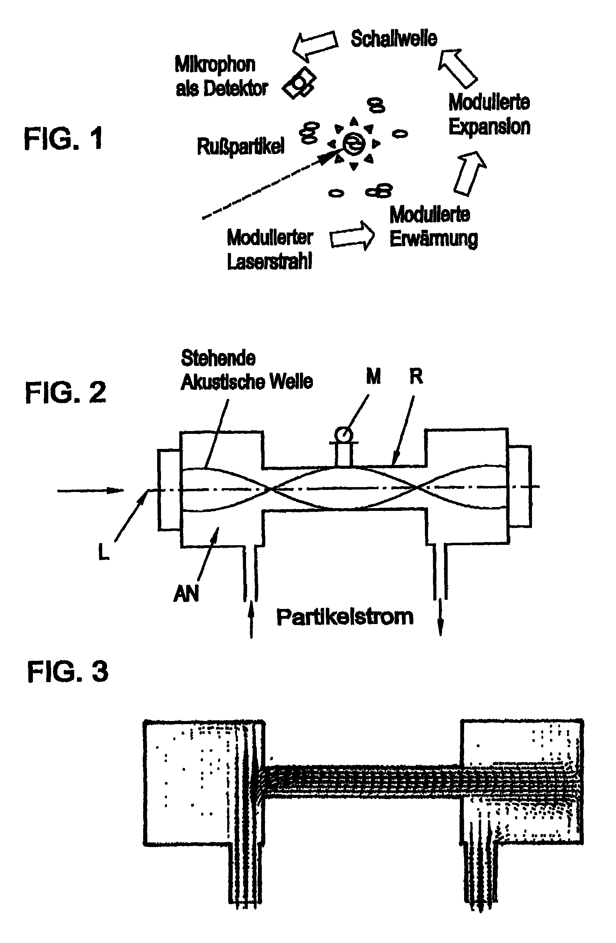

Die Photoakustik erlaubt eine sehr empfindliche Messtechnik zur Bestimmung von zum Beispiel Spurengasoder Aerosolkonzentrationen in einem Trägergas. Allgemein betrachtet wird beim photoakustischen Messverfahren eine feste, flüssige oder gasförmige Probe, die zumindest eine (eventuell frequenz-selektiv) strahlungsabsorbierende Substanz enthält, mit zeitlich intermittierender elektromagnetischer Strahlung, häufig mit sichtbarem oder infrarotem Licht, bestrahlt. Durch die Absorption der Strahlung wird die Substanz erwärmt und in den Strahlungspausen wird die Wärme an die Umgebung abgegeben. Dadurch entsteht eine periodische Erwärmung und Abkühlung des bestrahlten Volumens, die wiederum Druckschwankungen gleicher Periode bewirkt, die sich als Schallwellen ausbreiten und mit empfindlichen Mikrophonen detektiert werden können. Die Methode ist schematisch in Fig. 1 dargestellt.

Zur Erhöhung der Empfindlichkeit werden resonante Zellen verwendet und die Periode bzw. die Frequenz der intermittierenden Bestrahlung wird auf die Eigenfrequenz der Messzelle abgestimmt. Für die zeitlich aufgelöste Messung von Substanzen in Gasen muss das Trägergas durch die Zelle strömen. Eine einfache Zelle mit longitudinaler Resonanz wird z. B. von Krämer und Niessner im Deutschen Gebrauchsmuster Nr. 200 17 795.8, sowie von Beck, Niessner und Haisch in Anal. Bioanal Chem 375 (2003), p. 1136 f beschrieben. Diese Zelle ist in Fig. 2 schematisch dargestellt. Sie besteht aus einem Rohr R, dessen Länge die Resonanzfrequenz bestimmt und dessen Durchmesser wesentlich kleiner als die Länge ist. Die Bereiche AN mit erweitertem Durchmesser an beiden Enden des Resonanzrohres R werden als "Notch" Filter bezeichnet. Die Durchmesseränderung erzeugt einen Schwingungsknoten der Druckwelle, und kann als "freies Ende" (Schnelle-Maximum, Druck-Knoten) betrachtet werden. Die Länge der gesamten Messzelle beträgt etwa eine Wellenlänge der Strahlung, vorzugsweise eines Laserstrahls L, wobei die folgende Gleichung den Zusammenhang der Wellenlänge Lambda mit der Resonanzfrequenz angibt:

$$\text{Lambda} = \text{Schallgeschwindigkeit} / \text{Resonanzfrequenz}$$

Ein Nachteil der gezeigten Messzelle ist durch die Anfälligkeit gegen Verschmutzung der Fenster gegeben, durch die die intermittierende Strahlung L ein- und austritt. Insbesonders bei der Verwendung der photoakustischen Zelle für die Messung von Aerosolen, z.B. Russpartikel aus Verbrennungsmotoren oder allgemein In der Umwelt, ist dies ein gravierendes Problem. Strömungsrechnungen haben gezeigt, dass das beispielsweise links der resonanten Zelle eintretende Gas bereits im linken "Notch"-Filter Volumen Wirbel ausbildet, die eine Strömung zum Fenster bewirken, wodurch sich einige Partikel des Mess-Aerosois dort ablagern und einen Störeffakt hervorrufen. Nach Durchtritt des Messgases durch die resonante zelle strömt es direkt auf das gegenüberliegende Fenster zu, wodurch ebenfalls einige Partikel des Mess-Aerosols abgelagert werden und ebenfalls einen Störeffekt bewirken. Der Störeffekt wird dadurch verursacht, dass die Ablagerungen auf den Fenstern ebenfalls Strahlung absorbieren und Schallwellen generieren, die sich störend überlagem. Eine genaue Messung, Insbesondere bei niedrigen Konzentrationen des Mess-Aerosols, wird dadurch verhindert. Das Ergebnis der Finite Elemente-Berechnung der Strömung in dieser Zelle ist In Fig. 3 dargestellt, wobei die Richtung und Geschwindigkeit der Strömung in der Abbildung durch die Richtung und Länge von Vektoren charakterisiert ist.

Die übliche Methode zum Sauberhalten optischer Fenster in durchströmten Anordnungen, etwa In Opacimetem, nämlich das Bespülen der Fenster mit einem Strom partikelfreier Luft, das die Kontamination der Fenster durch Partikel verhindert, ist bei der bekannten Messzelle nach Fig. 2 aus akustischen Gründen nicht einsetzbar, da der Spülluftstrom ein "Pfeifen" bewirkt und so dem gewünschten Messsignal ein wesentlich höheres Störsignal überlagert.

Die Aufgabe der Erfindung war daher eine Messzelle, die unter Vermeidung der oben genannten Nachteile die Verschmutzung der Fenster als Eintrittsstellen der Strahlung in die zelle vermindert und die Ablagerung der Partikel des Mess-Aerosols darauf verlangsamt, so daß der Betrieb der Messzelle mit hoher Empfindlichkeit über lange Zelt möglich ist.

Zur Lösung dieser Aufgabe ist erfindungsgemäß vorgesehen, daß zwei Einlässe an den einander gegenüberliegenden Enden des Rohrabschnittes und zumindest ein Auslaß an einer Stelle mittig zwischen den Einlässen vorgesehen sind. Damit wird die Strömung des Gases In der Messzelle nicht von einer Seite zur anderen geführt, sondern es wird das Gas In zwei Tellströme aufgespalten, die jeweils fensterseitig, oder links bzw. rechts der Mitte oder des Resonanzrohres mit dem Sensor-Mikrophon, in die Messzelle zugeführt werden. Dann strömen die Tellströme des Proben-Gases in zwei Tellzellen gegeneinander, und an einer oder mehreren, der Mitte oder dem Resonanzrohr mit dem Sensormikrophon naheliegenden Auslasskanälen wieder aus der Messzelle. Durch Vermeidung des "Aufprallens" der Gasströmung auf die Fenster bzw. andere Eintrittsstellen der Strahlung wird die Ablagerung der Partikeln an diesen Stellen beträchtlich vermindert.

Wenn gemäß einer vorteilhaften Ausführungsform der Erfindung die Einlässe und/oder der zumindest eine Auslaß in Ringkanäle übergehen, die den Rohrabschnitt koaxial umgeben, von welchen Ringkanälen radiale Einström- bzw. Ausströmkanäle zum Rohrabschnitt verlaufen, kann eine noch gleichmäßigere Einströmung und Ausströmung aus der Messzelle erreicht werden. Damit werden aber auch Verwirbelungen bedeutend vermindert, die sonst Ablagerung von Partikeln an den Eintrittsstellen der Strahlung verursachen.

Mit dem gleichen Effekt könnte bei einer anderen Ausführungsform der erfindungsgemäßen Messkammer auch vorgesehen sein, daß die Einlässe und/oder der zumindest eine Auslaß in Ringkanäle übergehen, die den Rohrabschnitt koaxial umgeben, von welchen Ringkanälen schmale Ringschlitze zum Rohrabschnitt verlaufen.

Je nach Anordnung muss die zweite Teilzelle resonant oder nicht-resonant ausgeführt werden.

Um die Vorteile der Verschmutzungsverminderung für Anordnungen zu erzielen, bei welchen eine nlcht-resonante zweite Teilzelle zusätzlich zu einer resonant ausgelegten Messzelle mit mittigem Sensor-Mikrophon nicht zu einer Reduzierung des Signals in der ersten Teilzelle führt, ist eine Ausführungsform der Erfindung von Vorteil, bei welcher ein Einlaß und ein mittiger Auslaß an den Enden einer resonanten Teilzelle vorgesehen sind, welche durch jeweils eine Kammer mit gegenüber dem Rohrabschnitt erweiterten Querschnittsfläche begrenzt ist, wobei sich der dem Auslaß benachbarten Kammer ein weiterer Rohrabschnitt mit ähnlich großer Querschnittsfläche wie jener der resonanten Teilzelle sowie eine weitere Kammer mit gegenüber dem Rohrabschnitt erweiterten Querschnittsfläche anschließen, und wobei der zweite Einlaß am dem Auslaß gegenüberliegenden Ende des weiteren Rohrabschnittes vorgesehen ist.

Vorzugweise wird bei dieser Variante die Länge der mittleren Kammer und des weiteren Rohrabschnittes jeweils etwa die Hälfte der Länge des Rohrabschnittes der resonanten Tellzelle betragen.

Damit eine Verstärkung des Signals in der ersten Tellzelle durch ebenfalls resonante Auslegung einer zweiten Teilzelle erreicht werden kann, wird in vorteilhafter Weise eine Ausführungsform angewendet, bei welcher ein Einlaß und ein erster von zwei mittigen Auslässen an den Enden einer resonanten Teilzelle vorgesehen sind, welche durch jeweils eine Kammer mit gegenüber dem Rohrabschnitt erweiterten Querschnittsfläche begrenzt Ist, wobei sich der dem ersten Auslaß benachbarten Kammer ein weiterer Rohrabschnitt mit ähnlich großer Querschnittsfläche und Länge wie jener der resonanten Teilzelle sowie eine weitere Kammer mit gegenüber dem Rohrabschnitt erweiterten Querschnittsfläche anschließen, und wobei ein zweiter mittiger Auslaß am sich an die mittige Kammer anschließenden Ende des weiteren Rohrabschnittes sowie der zweite Einlaß am dem dem Auslaß gegenüberliegenden Ende des weiteren Rohrabschnittes vorgesehen ist.

Vorzugsweise wird dabei die Länge der mittleren Kammer und des weiteren Rohrabschnittes jeweils annähernd gleich der Länge der resonanten Teilzelle gewählt.

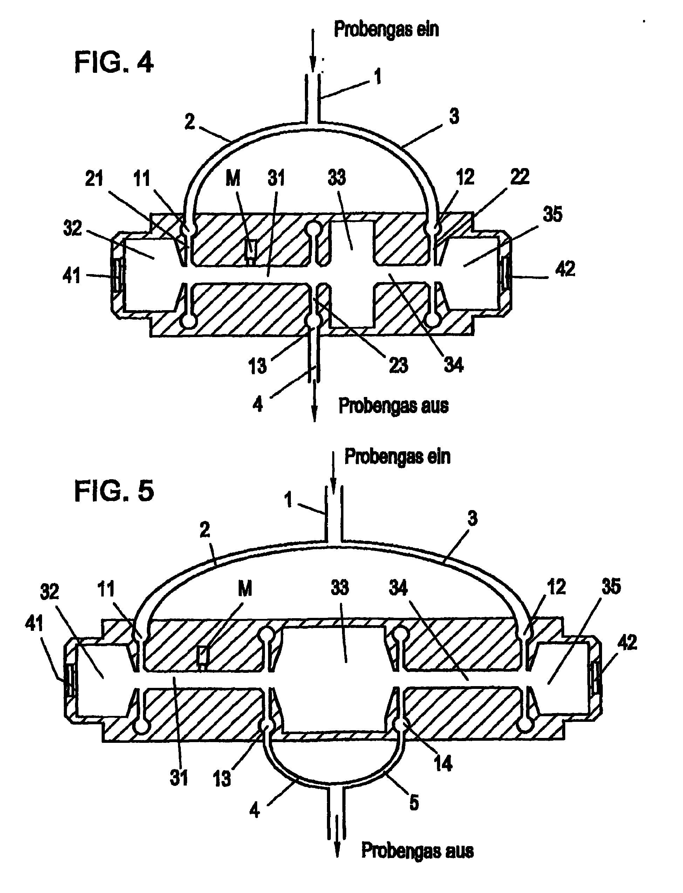

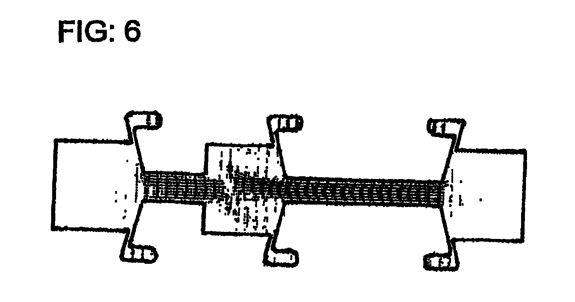

In der nachfolgenden Beschreibung wird die Erfindung anhand der beigefügten Zeichnungen näher erläutert. Dabei zeigt die Fig. 1 schematisch das Prinzip der photoakustischen Messung, Fig. 2 zeigt den Prinzipaufbau einer (längs-)resonanten photoakustischen Messzelle, Fig. 3 ist eine Darstellung der Strömung in der Messzelle der Fig. 2, Fig. 4 zeigt eine erste Ausgestaltungsform der erfindungsgemäßen Messzelle mit nicht resonanter zweiter Teilzelle im Längsschnitt, Fig. 5 ist ein Längsschnitt durch eine andere Ausgestaltungsform der erfindungsgemäßen Messzelle mit resonanter zweiter Teilzelle, und Fig. 6 ist eine zur Fig. 4 äquivalente Darstellung der Strömung in einer erfindungsgemäßen Messzelle.

Für die Auslegung der Messzelle, schematisch im Längsschnitt in Fig. 2 dargestellt, bei photoakustischen Messungen nach dem in Fig. 1 schematisch dargestellten Prinzip müssen generell folgende Regeln beachtet werden:

Die Resonanzfrequenz des vom Laserstrahl L axial durchsetzten Messzellen-Resonanzrohres R mit dem Mikrophon M wird primär durch dessen Länge bestimmt. Bei näherungsweise symmetrischen Reflexionsbedungen an den Rohrenden hat die stehende akustische Druckwelle ihr Maximum etwa in der Mitte und zwei Druckschwingungsknoten etwa an den Rohrenden ("freien" Enden des Resonators). Die Länge des Rohres R ist daher etwa Lambda/2 und das Mikrophon M muss etwa in der Mitte positioniert sein.

An den Fenstern verschwindet die Schallschnelle und der Schalldruck hat ein Maximum (Phasenverschiebung von Lambda/2). Deshalb, und wegen der Effekte wie im vorigen Absatz erläutert, wird die Gesamtlänge der Messzelle näherungsweise n x Lambda/2, wobei n eine ganze Zahl ist, betragen.

Die Eintritts- und Austrittskanäle für das Messgas werden vorzugsweise in den Druckschwingungsknoten der Schallwelle positioniert. Es hat sich gezeigt, dass die durch den Anschluss der Messgasleitungen hervorgerufenen Störungen, z. B. Turbulenzen, dann einen nur minimalen Einfluss auf die stehende Welle und das Messsignal haben.

Abweichungen von der einfachen ganzzahligen Beziehung zwischen den tatsächlichen Längen der Tellzellen und einem Lambda/4 (Viertel der Wellenlänge) werden durch die phasenschlebende Wirkung der "Notch"-Filter AN, bzw. durch die an den eventuell verlaufend gestalteten Übergängen von einem zum anderen Durchmesser gegebenen Reflexions- und Transmissionsbedingungen, bewirkt und müssen entsprechend berücksichtigt werden - empirisch oder durch geeignete Simulationsrechnungen.

Eine erste erfindungsgemäße Ausführungsform einer Messzelle ist in Fig. 4 beispielhaft im Längsschnitt dargestellt. Das Probengas wird in diese Messzelle über eine Probengasleitung 1 zugeführt, in den getrennten Einlassleitungen 2 und 3 in zwei separate Teilströme aufgespaltet und von den Einlässen 2, 3 in die beiden außenliegenden Ringkanäle 11 und 12 der Messzelle geführt. Von dort treten die Teilströme radial durch Ringspalte 21 und 22 oder radiale Kanäle in das Messrohr 31 sowie ein koaxiales, ähnlich dimensioniertes Rohr 34 ein, wobei das Messrohr 31 und das Rohr 34 durch eine Kammer 33 mit erweiterter Querschnittsfläche voneinander getrennt sind. Die Teilströme des Probengases fließen von außen her durch die Teilzellen 31 und 33, 34 zur Mitte der Gesamtzelle, von wo sie durch den Ringspalt 23 und den Ringkanal 13 in die Auslaßleitung 4 strömen. Das Probengas strömt dabei weg von den äußeren Kammern 32, 35 mit größerer Querschnittsfläche und weg von den für den Durchtritt der Strahlung erforderlichen Fenstern 41 und 42. Die Förderung des Probengasstromes kann durch eine hier nicht dargestellt Pumpe hinter der Messzelle, oder beispielsweise durch den Abgasdruck in der Abgasanlage einer Verbrennungskraftmaschine erfolgen.

In der "resonanten" ersten Teilzelle mit einem Resonanzrohr 31 der Länge von etwa $\lambda/2$ erhält man bei geeigneter Periode der Strahlung, die mit bekannten Methoden auf die Resonanz der Zelle abgestimmt werden muss, bei Vorliegen von absorbierenden Substanzen im Probengas ein Signal des Sensor-Mikrophons M, das die gleiche Frequenz wie die Strahlung besitzt und daher mit bekannten Mitteln (z.B. mit der sogenannten "Lock-In"-Technik und mithilfe z.B. eines Synchron-Demodulators) sehr empfindlich und selektiv nachgewiesen werden kann.

Die zweite Teilzelle besteht aus den Segmenten 33, 34 mit verschiedenen Durchmessern und mit Längen von je etwa $\lambda/4$, weshalb sich in dieser Teilzelle keine mit der Periode der Strahlung resonante stehende Welle ausbilden kann, wie dem Fachmann aufgrund der zugrundeliegenden physikalischen Gesetze einsichtig ist. In der Anordnung der Abb. 4 ist es auch unbedingt erforderlich, dass die zweite Teilzelle nicht-resonant ist. Eine resonante stehende Welle In dieser Teil-Zelle wäre nämlich zur resonanten stehenden Welle in der ersten Teil-Zelle um $\lambda/2$ bzw. um die Phase $\pi$ (=180°) verschoben. Deshalb würden sich die beiden stehenden Wellen auslöschen oder schwächen, und man erhielte kein oder nur ein geringes Signal vom Sensor-Mikrophon M des Messrohres 31 der "resonanten" ersten Teilzelle.

In der Ausführung der Messzelle entsprechend Fig. 5 können belde Teilzellen resonant ausgeführt werden. Da zwischen den beiden Teilzellen-Resonatoren 31 und 34 ein etwa $\lambda/2$ langer Kompensadonsraum 33 mit erweitertem Durchmesser angeordnet Ist, beträgt die Phasenverschiebung zwischen den stehenden Wellen der ersten Teilzelle und der zweiten Teilzelle etwa $\lambda$, und die resultierende Phasenverschiebung ist $2\pi$ (bzw. 360°). Es kommt zu einer konstruktiven (positiven) Überiagerung der Wellen und das Signal vom Sensor-Mikrophon M im Messrohr 31 der "resonanten" ersten Teilzelle wird verstärkt. Der Nachteil dieser Zelle ist die größere Länge, die nicht nur das Bauvolumen vergrößert, sondern auch erfordert, dass die Strahlung besser parallel gebündelt sein muss, um über eine größere Länge einen ausreichend kleinen Strahldurchmesser beizubehalten. Ein kleiner Strahldurchmesser Ist unbedingt erforderlich, da zur Vermeidung von Störsignalen keine Strahlung an die Wände der schmalen, langen Rohre 31,34 gelangen darf.

Das Ergebnis der Finite-Elemente-Berechnung der Strömung in einer Zelle gemäß Fig. 4 ist in Fig. 6 dargestellt. Auch hier ist wieder, wie für die Abbildung zum Stand der Technik In Fig. 3, die Richtung und Geschwindigkeit der Strömung durch die Richtung und Länge von Vektoren charakterisiert. Man erkennt deutlich, dass weder eine direkte noch eine Wirbelströmung zu den Fenstern existiert. Auch experimentell hat sich bestätigt, dass die Fenster 41, 42 dieser Messzelle nur langsam und vergleichswelse gering verschmutzen, sodass eine lange Messdauer ohne Säubern der Fenster ermöglicht wird.

**Patentansprüche**

1. Messkammer für photoakustische Sensoren zur kontinuierlichen Messung von strahlungsabsorbierenden Substanzen, insbesondere von strahlungsabsorbierenden Partikeln, In gasförmigen Proben, mit zumindest einem Einlaß und zumindest einem Auslaß für die Proben, einem von der Probe in Längsrichtung durchströmbaren Rohrabschnitt mit Mikrophon, sowie mit zumindest einer mit dem Rohrabschnitt fluchtenden Eintritts- und Austrittsstelle für einen Laserstrahl, welche Eintritts- und Austrittsstelle durch zumindest jeweils eine Kammer mit gegenüber dem Rohrabschnitt erweiterten Querschnittsfläche vom Messrohr beabstandet sind, **dadurch gekennzeichnet, dass** zwei Einlässe (2, 3) an den einander gegenüberliegenden Enden des Rohrabschnittes (31) und zumindest ein Auslaß (4) an einer Stelle mittig zwischen den Einlässen vorgesehen sind.

2. Messkammer nach Anspruch 1, **dadurch gekennzeichnet, daß** die Einlässe (2, 3) und/oder der zumindest eine Auslaß (4) in Ringkanäle (11, 12 bzw. 13) übergehen, die den Rohrabschnitt (31) koaxial umgeben, von welchen Ringkanälen radiale Einström- bzw. Ausströmkanäle zum Rohrabschnitt (31) verlaufen.

3. Messkammer nach Anspruch 1, **dadurch gekennzeichnet, daß** die Einlässe (2, 3) und/oder der zumindest eine Auslaß (4) in Ringkanäle (11, 12 bzw. 13) übergehen, die den Rohrabschnitt (31) koaxial umgeben, von welchen Ringkanälen schmale Ringschlitze (21, 22 bzw. 23) zum Rohrabschnitt verlaufen.

4. Messkammer nach einem der Ansprüche 1 bis 3, **dadurch gekennzeichnet, daß** ein Einlaß (2) und ein mittiger Auslaß (4) an den Enden einer resonanten Teilzelle (31) vorgesehen sind, welche durch jeweils eine Kammer (32, 33) mit gegenüber dem Rohrabschnitt (31) erweiterten Querschnittsfläche begrenzt ist, wobei sich der dem Auslaß (4) benachbarten Kammer (33) ein weiterer Rohrabschnitt (34) mit ähnlich großer Querschnittsfläche wie jener der resonanten Teilzelle (31) sowie eine weitere Kammer (35) mit gegenüber dem Rohrabschnitt (34) erweiterten Querschnittsfläche anschließen, und wobei der zweite Einlaß (3) am dem Auslaß (4) gegenüberliegenden Ende des weiteren Rohrabschnittes (34) vorgesehen Ist.

5. Messkammer nach Anspruch 4, **dadurch gekennzeichnet, daß** die Länge der mittleren Kammer (33) und des weiteren Rohrabschnittes (34) jeweils etwa die Hälfte der Länge des Rohrabschnittes (31) der resonanten Teilzelle beträgt.

6. Messkammer nach einem der Ansprüche 1 bis 3, **dadurch gekennzeichnet, daß** ein Einlaß (2) und ein erster (4) von zwei mittigen Auslässen (4, 5) an den Enden einer resonanten Teilzelle (31) vorgesehen sind, welche durch jeweils eine Kammer (32, 33) mit gegenüber dem Rohrabschnitt (31) erweiterten Querschnittsfläche begrenzt ist, wobei sich der dem ersten Auslaß (4) benachbarten Kammer (33) ein weiterer Rohrabschnitt (34) mit ähnlich großer Querschnittsfläche und Länge wie jener der resonanten Teilzelle (31) sowie eine weitere Kammer (35) mit gegenüber dem Rohrabschnitt (34) erweiterten Querschnittsfläche anschließen, und wobei ein zweiter mittiger Auslaß (5) am sich an die mittige Kammer (33) anschließenden Ende des weiteren Rohrabschnittes (34) sowie der zweite Einlaß (3) am dem dem Auslaß (5) gegenüberliegenden Ende des weiteren Rohrabschnittes (34) vorgesehen ist.

7. Messkammer nach Anspruch 6, **dadurch gekennzeichnet, daß** die Länge der mittleren Kammer (33) und des weiteren Rohrabschnittes (34) jeweils annähernd gleich der Länge der resonanten Teilzelle (31) sind.

## Claims

1. Measuring cell for photo-acoustic sensors for the continuous measurement of radiation-absorbing substances, especially radiation-absorbing particles, in gaseous samples, with at least one inlet and at least one outlet for the samples, with a tubular portion of a measuring tube, through which the sample can flow in a longitudinal direction, with a microphone and with at least one input and output point for a laser beam aligned with the tubular portion, which input and output points are respectively separated from the measuring tube by at least one cell with a cross-sectional area enlarged relative to the tubular portion,
   **characterized in that**
   two inlets (2, 3) are provided at the mutually-opposite ends of the tubular portion (31), and at least one outlet (4) is provided at a position centrally between the inlets.

2. Measuring cell according to claim 1,
   **characterised in that**
   the inlets (2, 3) and/or the at least one outlet (4) merge into annular channels (11, 12 or respectively 13), which surround the tubular portion (31) in a coaxial manner, from which annular channels radial inflow channels and respectively outflow channels, extend to the tubular portion (31).

3. Measuring cell according to claim 1,
   **characterised in that**
   the inlets (2, 3) and/or the at least one outlet (4) merge into annular channels (11 , 12 or respectively 13), which surround the tubular portion (31) in a coaxial manner, from which annular channels narrow annular slots (21, 22 and respectively 23) extend to the tubular portion (31).

4. Measuring cell according to any one of claims 1 to 3,
   **characterised in that**
   an inlet (2) and a central outlet (4) are provided at the end of a resonant partial cell. (31), which is limited in each case by a cell (32, 33) with cross-sectional area enlarged relative to the tubular portion (31) wherein the cell (33) adjacent to the outlet is connected to a further tubular portion (34) with cross-sectional area of a similar size to that of the resonant partial cell (31) and to a further cell (35) with cross-sectional area enlarged relative to the tubular portion (34), and wherein the second inlet (3) is provided at the end of the further tubular portion (34) disposed opposite to the outlet (4).

5. Measuring cell according to claim 4, **characterised in that** the length of the central cell (33) and of the further tubular portion (34) respectively is approximately half the length of the tubular portion. (31) of the resonant partial cell.

6. Measuring cell according to any one of claims 1 to 3, **characterised in that** an inlet (2) and a first outlet (4) of two central outlets (4, 5) are provided at the ends of a resonant partial cell (31), which is limited respectively by a cell (32, 33) with cross-sectional area enlarged by comparison with the tubular portion (31), wherein the cell (33) adjacent to the first outlet is connected to a first tubular portion (34) with a cross-sectional area and length similar in size to that of the resonant partial cell (31) and to a further cell (35) With cross-sectional area enlarged relative to the tubular portion (34) and wherein a second central outlet (5) is provided at the end of the further tubular portion (34) connected to the central cell (33) and at the end of the further tabular portion (34) disposed opposite to the outlet (5).

7. Measuring cell according to claim 6, **characterised in that** the length of the central cell (33) and of the further tubular portion (34) is respectively approximately the same as the length of the resonant partial cell (31).

## Revendications

1. Chambre de mesure de capteurs photoacoustiques pour mesurer en continu des substances absorbant les rayonnements, notamment des particules absorbant les rayonnements, dans des échantillons gazeux, comportant au moins une admission et au moins une évacuation des échantillons, un tronçon de tube d'un tube de mesure comportant un microphone traversé par l'échantillon dans la direction longitudinale ainsi que au moins un emplacement d'entrée et un emplacement de sortie d'un rayon laser s'alignant avec le tronçon de tube, lesquels emplacement d'entrée et emplacement de sortie sont espacés du tube de mesure par au moins une chambre respective ayant une surface de section transversale élargie par rapport au tronçon de tube, **caractérisée en ce que** deux orifices d'admission (2,3) sont prévus aux extrémités en vis à vis du tronçon de tube (31) et au moins un orifice d'évacuation (4) est prévu à un emplacement central entre les orifices d'admission.

2. chambre de mesure selon la revendication 1, **caractérisée en ce que** les orifices d'admission (2, 3) et/ou au moins un orifice d'évacuation (4) aboutissent à des canaux annulaires (11, 12, respectivement 13), qui entourent coaxialement le tronçon de tube (31), à partir desquels canaux annulaires des canaux d'amenée, respectivement d'évacuation traversent le tronçon de tube (31).

3. Chambre de mesure selon la revendication 1, **caractérisée en ce que** les orifices d'admission (2, 3) et/ou au moins un orifice d'évacuation (4) aboutissent à des canaux annulaires (11, 12, respectivement 13), qui entourent coaxialement le tronçon de tube (31), à partir desquels canaux annulaires des fentes annulaires minces (21,22, respectivement 23) traversent le tronçon de tube.

4. Chambre de mesure selon une des revendications 1 à 3, **caractérisée en ce que** un orifice d'admission (2) et un orifice d'évacuation central (4) sont prévus aux extrémités d'une cellule résonnante partielle (31), laquelle est respectivement délimitée par une chambre (32, 33) ayant une surface de section transversale élargie par rapport au tronçon de tube (31), moyennant quoi un autre tronçon de tube (34) ayant une surface de section transversale aussi grande que celle de la cellule résonnante partielle (31) ainsi qu'une autre chambre (35) ayant une surface de section transversale élargie par rapport au tronçon de tube (34) se rattachent à la chambre (33) voisine de l'orifice d'évacuation (4) et moyennant quoi le deuxième orifice d'admission (3) est prévu à l'extrémité de l'autre tronçon de tube (34) opposés à l'orifice d'évacuation (4).

5. Chambre de mesure selon la revendication 4, **caractérisée en ce que** la longueur de la chambre centrale (33) et de l'autre tronçon de tube (34) correspond respectivement à environ la moitié de la longueur du tronçon de tube (31) de la cellule résonnante partielle.

**6.** Chambre de mesure selon une des revendications 1 à 3, **caractérisée en ce que** un orifice d'admission (2) et un premier (4) de deux orifices d'évacuation centraux (4, 5) sont prévus aux extrémités d'une cellule résonnante partielle (31), laquelle est respectivement délimitée par une chambre (32, 33) ayant une surface de section transversale élargie par rapport au tronçon de tube (31), moyennant quoi un autre tronçon de tube ayant une surface de section transversale et une longueur aussi grandes que celles de la cellule résonnante partielle (31) ainsi qu'une autre chambre (35) ayant une surface de section transversale élargie par rapport au tronçon de tube (34) se rattachent à la chambre (33) adjacente au premier orifice d'évacuation (4) et moyennant quoi un deuxième orifice d'évacuation central (5) est prévu à l'extrémité de l'autre tronçon de tube (34) raccordée à la chambre centrale (33) et le deuxième orifice d'admission (3) est prévu à l'extrémité de l'autre tronçon de tube (34) opposée à l'orifice d'évacuation (5).

**7.** Chambre de mesure selon la revendication 6, **caractérisée en ce que** la longueur de la chambre centrale (33) et de l'autre tronçon de tube (34) sont approximativement respectivement équivalentes à la longueur de la cellule résonnante partielle (31).

## FIG. 1

## FIG. 2

## FIG. 3

Probengas ein

FIG. 4

Probengas aus

Probengas ein

FIG. 5

Probengas aus

FIG: 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20017795


**In der Beschreibung aufgeführte Nicht-Patentliteratur**

- **VON BECK, NIESSNER.** *Haisch in Anal. Bioanal Chem,* 2003, vol. 375, 1136 f